# EUROPÄISCHE PATENTSCHRIFT

(11) **EP 3 734 009 B1**
(45) Veröffentlichungstag und Bekanntmachung des Hinweises auf die Patenterteilung: **15.11.2023**
(21) Anmeldenummer: 20168943.7
(22) Anmeldetag: 09.04.2020
(51) Int. Cl.: E06B 3/263, E06B 3/267, B29C 44/58

(54) **VERBINDUNGSPROFIL, VERBUNDPROFIL UND VERFAHREN ZUR HERSTELLUNG DES VERBINDUNGSPROFILS**
CONNECTION PROFILE, COMPOSITE PROFILE AND METHOD FOR MANUFACTURING THE CONNECTION PROFILE
PROFILÉ DE RACCORDEMENT, PROFILÉ COMPOSITE ET PROCÉDÉ DE FABRICATION DE PROFILÉ DE RACCORDEMENT

(30) Priorität: 30.04.2019 DE 102019111192
(43) Veröffentlichungstag der Anmeldung: 04.11.2020
(73) Patentinhaber: Joma-Polytec GmbH, 72411 Bodelshausen (DE)
(72) Erfinder: Reinfrank, Mario, 72379 Hechingen (DE); Berndorfer, Matthias, 72810 Gomaringen (DE)
(74) Vertreter: DREISS Patentanwälte PartG mbB

(56) Entgegenhaltungen:
- DE-A1- 10 035 649
- DE-A1-102010 049 097

## Beschreibung

Die Erfindung betrifft ein Verbindungsprofil und ein Verfahren zur Herstellung des Verbindungsprofils.

Aus dem Stand der Technik ist bekannt, dass in Hohlräume von Profilen für den Fenster- und Türenbau vorgeformte Kunststoffteile eingeschoben werden, um die Dämmwirkung des Profils zu erhöhen.

Ebenfalls ist bekannt, dass bereits abgelängte Profile nachträglich ausgeschäumt werden.

DE 100 35 649 A1 offenbart ein Fensterprofil, das zwei Aluminiumschalen aufweist, die durch ein Polyamidprofil verbunden sind, das aus zwei die Aluminiumschalen verbindenden ersten Stegen und zwei die ersten Stege verbindenden zweiten Stege besteht. Der durch die Stege gebildete Hohlraum mit PUR-Schaum gefüllt ist.

Somit ist ein Fensterprofil gemäss der Präambel des Anspruchs 1 aus dem genannten Dokument bekannt.

DE 10 2010 049 097 A1 offenbart ein Verfahren zur Einbringung von Schaummaterial in Hohlkammerprofile, insbesondere Fenster- oder Türhohlkammerprofile. Zunächst erfolgt im Wege eines Extrusionsverfahrens die Formgebung des mindestens eine Hohlkammer und mindestens eine Befüllungsnut aufweisenden Hohlkammerprofils, wobei das Hohlkammerprofil mindestens eine mit Schaummaterial zu befüllende Hohlkammer aufweist, der die Befüllungsnut zugeordnet ist. In einem zwischen zu befüllender Hohlkammer und Befüllungsnut befindlichen Trennsteg wird mindestens eine Öffnung eingebracht. Danach wird ein Schaummaterial in die Befüllungsnut appliziert, das über die Öffnung in die zu befüllende Hohlkammer fließt und diese Hohlkammer hierdurch ausschäumt.

Die Probleme des Standes der Technik werden durch ein Verbindungsprofil gemäß dem Anspruch 1, ein Verbundprofil gemäß einem nebengeordneten Anspruch und ein Verfahren zur Herstellung des Verbindungsprofils gemäß einem nebengeordneten Anspruch gelöst. Vorteilhafte Weiterbildungen finden sich in den Unteransprüchen sowie in der nachfolgenden Beschreibung von Ausführungsbeispielen.

Ein erster Aspekt dieser Beschreibung betrifft ein Verbindungsprofil für ein Verbundprofil, wobei das Verbindungsprofil umfasst: einen ersten Befestigungsabschnitt zur Festlegung des Verbindungsprofils zu einem ersten Profil; einem zweiten Befestigungsabschnitt zur Festlegung des Verbindungsprofils zu einem zweiten Profil; wenigstens einen zwischen den beiden Befestigungsabschnitten befindlichen Innenraum, wobei der Innenraum durch eine Wandung des Verbindungsprofils begrenzt wird, und wobei die Wandung eine sich in Längsrichtung des Verbindungsprofils erstreckende und materialschlüssig geschlossene Zuführfuge aufweist.

Gemäß einem vorteilhaften Beispiel ist ein Isoliermaterial, in dem Innenraum angeordnet.

Vorteilhaft wird damit ein Verbindungsprofil bereitgestellt, welches mit dem innen liegenden Isoliermaterial umgehend weiterverarbeitet werden kann. Das Isoliermaterial ist in dem Innenraum des Verbindungsprofils angeordnet und damit abgetrennt angeordnet. Das Isoliermaterial ist damit vor einer Beschädigung in weiteren Bearbeitungsschritten geschützt.

Ein vorteilhaftes Beispiel zeichnet sich dadurch aus, dass wenigstens eine Tragwandung die Befestigungsabschnitte miteinander verbinden, und wobei die die Zuführfuge umfassende Wandung keine Tragwandung ist. Vorteilhaft muss die Zuführfuge keine großen Kräfte aufnehmen.

Ein vorteilhaftes Beispiel zeichnet sich dadurch aus, dass die die Zuführfuge umfassende Wandung zwischen zwei Fußkonturen des ersten Befestigungsabschnitts angeordnet ist. Durch die Anordnung der Wandung zwischen den beiden Fußkonturen ist die Zuführfuge nicht sichtbar und kraftentkoppelt angeordnet.

Ein vorteilhaftes Beispiel zeichnet sich dadurch aus, dass das Isoliermaterial ein aufgeschäumtes Material umfasst. Das aufgeschäumte Material kann vorteilhaft in fast jede denkbare Innenkontur des Innenraums eingebracht werden und ist durch Formschluss vorteilhaft in dem Verbindungsprofil festgelegt. Ein vorteilhaftes Beispiel zeichnet sich dadurch aus, dass das Isoliermaterial eine reflektierende Dämmfolie umfasst, welche auf eine Oberfläche des Innenraums aufgeklebt ist.

Ein vorteilhaftes Beispiel zeichnet sich dadurch aus, dass das Isoliermaterial eine Beschichtung umfasst. Vorteilhaft können Lacke, Harze oder sonstige funktionale Lacke in den Innenraum eingebracht werden. Beispielsweise wird eine reflektierend wirkende Beschichtung zur Wärmedämmung eingebracht.

Teil der beanspruchten Erfindung ist es, dass die Zuführfuge und die die Zuführfuge umfassende Wandung das gleiche Material umfassen. Vorteilhaft wird erreicht, dass keine Zug- oder Druckspannungen durch Temperaturunterschiede die Zuführfuge belasten oder beeinträchtigen. Damit wird die Lebensdauer des Verbindungsprofils erhöht. Im Falle eines zunächst offen extrudierten Profils wird mithilfe der Zuführfuge auch der Innenbereich bzw. die Innenkontur des Profils kalibriert, womit die Oberfläche bzw. die Wandung der späteren Hohlkammer mit größerer Präzision hergestellt wird.

Ein zweiter Aspekt dieser Beschreibung betrifft ein Verbundprofil umfassend: zwei Profile mit jeweiligen Aufnahmeabschnitten; und wenigstens ein Verbindungsprofil gemäß dem ersten Aspekt, welches zwischen den zwei Profilen angeordnet ist, und welches mit seinen Befestigungsabschnitten in den Aufnahmeabschnitten aufgenommen ist.

Ein dritter Aspekt dieser Beschreibung betrifft ein Verfahren zum Herstellen des Verbindungsprofils gemäß dem ersten Aspekt mit folgenden Schritten: Extrudieren und Kalibrieren wenigstens eines Rohlings; Transportieren des wenigstens einen Rohlings über einen ersten Bereich hinweg, in welchem eine Lanze über eine geöffnete Zuführfuge der Wandung des Rohlings in den geöffneten Innenraum hineinragt; Verschließen der geöffneten Zuführfuge in einen zweiten Bereich mittels einer Verbindungsvorrichtung.

Ein vorteilhaftes Beispiel umfasst: Einbringen des Isoliermaterials in den Innenraum in einem dritten Abschnitt, in welchem wenigstens eine Austrittsöffnung der Lanze innerhalb des geschlossenen Innenraums angeordnet ist.

Ein vorteilhaftes Beispiel zeichnet sich dadurch aus, dass das Verfahren umfasst: Ablängen des Verbindungsprofils in einem vierten Abschnitt mittels einer Ablängvorrichtung wie beispielsweise einer Säge oder einer Guillotine, wobei der dritte und der vierte Abschnitt so weit voneinander beabstandet sind, dass in dem vierten Abschnitt eine Schneidfestigkeit des in den Innenraum eingebrachten Isoliermaterials erreicht ist.

In der Zeichnung zeigen:
- Figur 1, 4 und 5: jeweils einen Schnitt durch ein beispielhaftes Verbindungsprofil;
- Figur 2: eine Vorrichtung zur Herstellung des Verbindungsprofils; und
- Figur 3: einen schematischen Schnitt aus Figur 2.

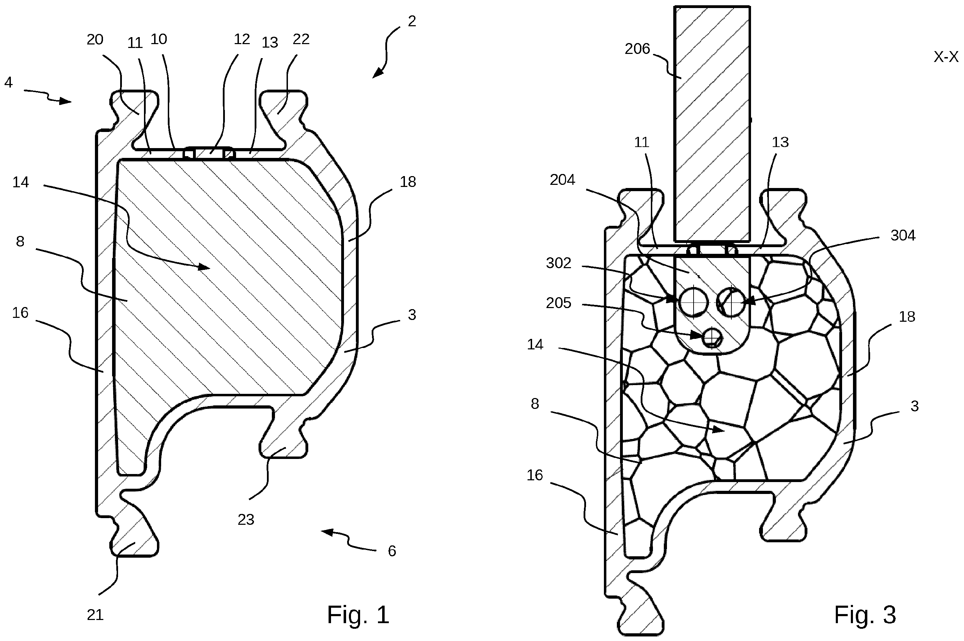

Figur 1 zeigt einen Schnitt durch ein beispielhaftes Verbindungsprofil 2. Das Verbindungsprofil 2 umfasst einen extrudierten Profilkörper 3 beispielsweise aus einem Thermoplast. Ein erster Befestigungsabschnitt 4 ist zur Festlegung des Verbindungsprofils 2 zu einem ersten Profil vorgesehen. Ein zweiter Befestigungsabschnitt 6 ist zur Festlegung des Verbindungsprofils 2 zu einem zweiten Profil vorgesehen.

Gemeinsam mit den beiden Profilen bildet das Verbindungsprofil 2 ein Verbundprofil für den Fenster- und Türenbau. Hierzu wird das Verbindungsprofil 2 zwischen den zwei Metallprofilen, insbesondere Aluminiumprofilen, angeordnet. Jedes der zwei Profile umfasst einen jeweiligen Aufnahmeabschnitt. Das Verbindungsprofil 2 ist mit seinen Befestigungsabschnitten 4, 6 in dem jeweiligen Aufnahmeabschnitt aufgenommen. Das Verbindungsprofil 2, welches die beiden Metallprofile miteinander verbindet, wirkt thermisch isolierend. Deshalb wird das Verbindungsprofil 2 auch als Isolierprofil bezeichnet.

Selbstverständlich ist das Verbindungsprofil 2 auch in anderen Bereichen wie beispielsweise dem Fahrzeugbau einsetzbar, um zwei Profile miteinander zu verbinden. Beispielsweise kann das Verbindungsprofil 2 als Abstandshalter dienen.

Wenigstens ein zwischen den beiden Befestigungsabschnitten 4, 6 befindlicher Innenraum 8 ist durch eine Wandung 10 des Verbindungsprofils 2 begrenzt. Die Wandung 10 begrenzt also den Innenraum 8 von einem Außenraum des Verbindungsprofils 2. Die Wandung 10 umfasst eine sich in Längsrichtung des Verbindungsprofils 2 erstreckende und geschlossene Fuge, die auch als Zuführfuge 12 bezeichenbar ist. Ein Isoliermaterial 14 ist in dem Innenraum 8 angeordnet.

Alternativ oder zusätzlich sind im Innenraum Gegenständen wie Kabel oder Drähte eingebracht.

Eine materialschlüssige bzw. stoffschlüssige Verbindung verschließt die Zuführfuge 12. Die materialschlüssige Verbindung verbindet zwei sich in Längsrichtung des Verbindungsprofils 2 erstreckende Abschnitte 11, 13 der Wandung 10 materialschlüssig miteinander.

Wenigstens zwei Tragwandungen 16, 18 verbinden die Befestigungsabschnitte 4, 6 miteinander. Die die Zuführfuge 12 umfassende Wandung 10 ist zwischen den wenigstens zwei Tragwandungen 16, 18 angeordnet. Der erste Befestigungsabschnitt 4 umfasst zwei Fußkonturen 20, 22. Der zweite Befestigungsabschnitt 6 umfasst zwei Fußkonturen 21, 23. Die die Zuführfuge 12 umfassende Wandung 10 ist zwischen den zwei Fußkonturen 20, 22 des ersten Befestigungsabschnitts 4 angeordnet.

Die Fußkonturen 20, 21, 22, 23 sind jeweils auch als Rastabschnitt bezeichenbar, welche in einen zugeordneten Abschnitt eines Metallprofils einrasten, um das Verbundprofil herzustellen.

Die jeweilige Fußkontur 20, 21, 22, 23 ragt von einem Grundkörper des Verbindungsprofils 2 ab. Insbesondere ist die jeweilige Fußkontur 20, 21, 22, 23 über einen flexiblen Verbindungsabschnitt mit dem Grundkörper des Verbindungsprofils verbunden. Der flexible Verbindungsabschnitt verläuft beispielsweise schräg zu einer Zuführrichtung, in welche das Verbindungsprofil zu einem Einrasten auf das zugeordnete Profil zugeführt wird.

Verbindungsabschnitt benachbarter Fußkonturen 20, 22 oder 21, 23 laufen beispielsweise in distaler Richtung aufeinander zu, um ein Einrasten in das zugehörige Profil des Verbundprofils zu erreichen. In einem nicht gezeigten Beispiel entfernen sich die flexiblen Verbindungsabschnitte in distaler Richtung voneinander. Durch den vorgenannten spiegelbildlichen Verlauf der flexiblen Verbindungsabschnitte wird ein zuverlässiger Formschluss erreicht.

Das Isoliermaterial 14 umfasst beispielsweise ein aufgeschäumtes Material wie PUR-Schaum und/oder eine reflektierende Dämmfolie, welche auf eine Oberfläche des Innenraums 8 aufgeklebt ist, und/oder eine reflektierende Beschichtung beispielsweise in Form eines auf die Oberfläche des Innenraums 8 aufgesprühten Lackes.

Die Zuführfuge 12 und die die Zuführfuge 12 umfassende Wandung 10 umfassen das gleiche Material, können aber selbstverständlich auch aus unterschiedlichen Materialien bestehen.

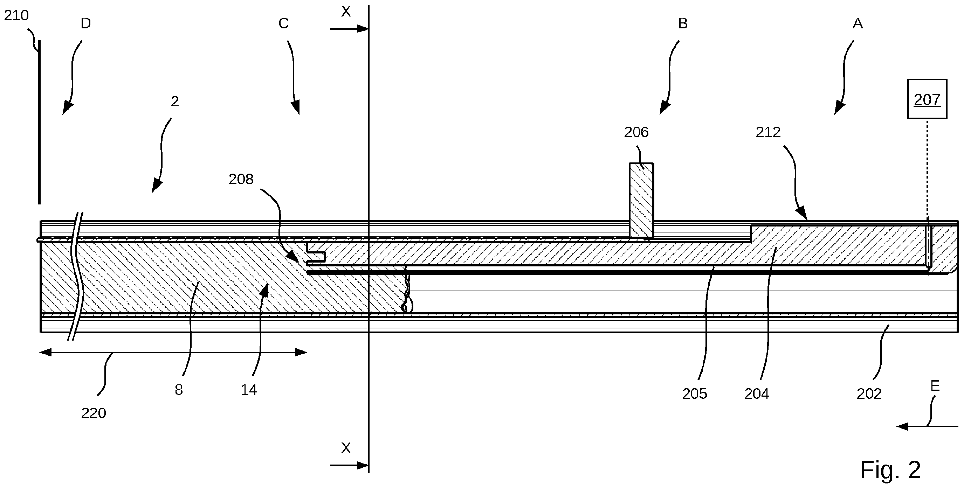

Figur 2 zeigt ausschnittsweise eine Vorrichtung zur Herstellung des Verbindungsprofils 2. Ein Rohling 202 wird in nicht gezeigter Form durch Extrusion und anschließende Kalibrierung hergestellt. Der Rohling 202 wird entsprechend einer Extrusionsrichtung E der gezeigten Vorrichtung zugeführt. Der Rohling 202 umfasst in einem Bereich A eine geöffnete Zuführfuge 212. Der Rohling 202 wird entweder mit der geöffneten Zuführfuge 212 extrudiert. In einem weiteren Beispiel wird die Zuführfuge 212 vor dem Bereich A durch Aufschlitzen des Rohlings 202 hergestellt. In einem weiteren Beispiel wird der Rohling 202 aus wenigstens zwei separat extrudierten Rohlingen bereitgestellt.

Es erfolgt ein Transportieren des wenigstens einen Rohlings 202 über den ersten Bereich A hinweg, in welchem eine Lanze 204 über die geöffnete Zuführfuge 212 der Wandung 10 des Rohlings 202 in den geöffneten Innenraum 8 hineinragt. Die Lanze 204 umfasst einen Zuführkanal 205, welcher mit einem Behälter 207 verbunden ist. In dem Behälter 207 ist das Rohmaterial für das Isoliermaterial 14 bevorratet. Je nach Typ des Isoliermaterials 14 kann anstatt des Behälters 207 eine andere Art der Bevorratung vorliegen.

In einem weitergehenden Beispiel ragen mehrere Lanzen über die geöffnete Zuführfuge 212 oder eine weitere Zuführfuge in den geöffneten Innenraum 8 hinein. Des Weiteren kann die wenigstens eine Lanze 204 eine Mehrzahl von Zuführkanälen umfassen, um beispielsweise mehrere Komponenten in einer Mischdüse zusammenzuführen und in den geschlossenen Innenraum 8 einzubringen.

Nachdem der wenigstens eine Rohling 202 den Bereich A durchlaufen hat, erfolgt ein Verschließen der geöffneten Zuführfuge 212 in einen zweiten Bereich B mittels einer Verbindungsvorrichtung 206. Die Verbindungsvorrichtung 206 ist beispielsweise ein Laserschweißgerät, ein Ultraschallschweißgerät oder ein Schmelze- bzw. Co-Extruder. Die Verbindungsvorrichtung 206 überführt die geöffnete Zuführfuge 212 in die geschlossene Zuführfuge 12.

In einem Beispiel ist die Verbindungsvorrichtung 206 derart ausgebildet, dass die Zuführfuge 212 durch Post-Co-Extrusion verschlossen wird, d. h. eine Kunststoffschmelze in die Zuführfuge extrudiert und kalibriert.

In einem Beispiel ist die Wandung mit der geöffneten Zuführfuge 212 so ausgebildet, dass sich die noch nicht miteinander verbundenen Abschnitte im Bereich B überlappen, sodass ein einfaches Verschweißen beispielsweise ein Ultraschallverschweißen der entsprechenden Wandungsabschnitte durchführen lässt.

Erst nach dem Schließen der Zuführfuge 12 erfolgt in Extrusionsrichtung E ein Einbringen des Isoliermaterials 14 in den Innenraum 8 in einem dritten Abschnitt C, in welchem wenigstens eine Austrittsöffnung 208 der Lanze 204 innerhalb des geschlossenen Innenraums angeordnet ist. Die Austrittsöffnung 208 ragt also über den zweiten Abschnitt B hinaus in Extrusionsrichtung E in den Innenraum 8 des Rohlings 202 hinein.

Ist eine Schneidfestigkeit des Isoliermaterials 14 erreicht, so erfolgt ein Ablängen des Verbindungsprofils 2 in einem vierten Abschnitt D mittels einer Ablängvorrichtung 210. Der dritte und der vierte Abschnitt C, D sind durch eine Distanz 220 so weit voneinander beabstandet, dass in dem vierten Abschnitt D eine Schneidfestigkeit des in den Innenraum 8 eingebrachten Isoliermaterials 14 erreicht ist. Die Distanz 220 ist so bemessen, dass das Extrudat des Verbindungsprofils 2 mindestens eine Sekunde für den Aushärtungsvorgang des Isoliermaterials 14 im Falle von Schaummaterial verweilt.

Figur 3 zeigt einen schematischen Schnitt X-X aus Figur 2. Die Lanze 204 bildet ein Gegenlager für die Vorrichtung 206, um die Zuführfuge sicher zu verschließen. Die Lanze 204 umfasst neben dem Zuführkanal 205 Kühlkanäle 302, 304. Die Kühlkanäle 302, 304 dienen zur Wärmeableitung der Schweißmasse, welche zum Schließen der Zuführfuge in diese eingebracht wird. Die der Vorrichtung 206 zugewandte Seite der Lanze 204 ist damit so temperiert, dass die Schweißmasse erstarrt und das Profil an dieser Stelle kalibriert und somit rundum geschlossen wird. Zusätzlich wird der Zuführkanal 205 temperiert, womit die Reaktionsmasse des eingebrachten Schaums beeinflusst wird, da die Schaumreaktion temperaturabhängig ist.

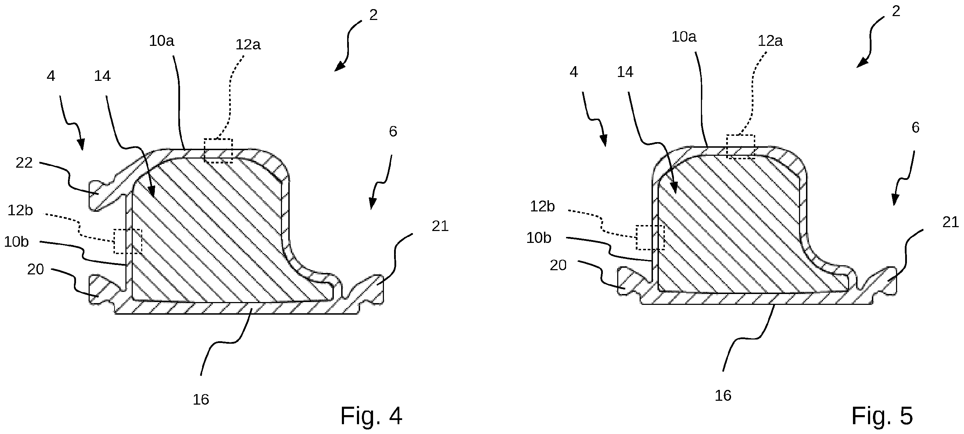

Die Figuren 4 und 5 zeigen weitere Beispiele für das Verbindungsprofil 2 in einem schematischen Schnitt. Die Figur 4 zeigt ein Beispiel mit insgesamt drei Fußkonturen 20, 22, 21. Die Figur 5 zeigt ein Beispiel mit insgesamt zwei Fußkonturen 20, 21. Die geschlossene Zuführfuge 12a, 12b ist entweder in der Wandung 10a oder in der Wandung 10b ausgeführt. Aus Figur 4 ist beispielhaft ersichtlich, dass die Tragwandung 16 mit einer gegenüber der Wandung 10a, 10b erhöhten Wanddicke ausgeführt ist.

## Patentansprüche

1. Ein Verbindungsprofil (2) für ein Verbundprofil, wobei das Verbindungsprofil (2) umfasst:
einen ersten Befestigungsabschnitt (4) zur Festlegung des Verbindungsprofils (2) zu einem ersten Profil des Verbundprofils;
einem zweiten Befestigungsabschnitt (6) zur Festlegung des Verbindungsprofils (2) zu einem zweiten Profil des Verbundprofils; und
wenigstens einen zwischen den beiden
Befestigungsabschnitten (4, 6) befindlichen Innenraum (8), wobei der Innenraum (8) durch eine Wandung (10) des Verbindungsprofils (2) begrenzt wird,
**dadurch gekennzeichnet,**
**dass** die Wandung (10) eine sich in Längsrichtung des Verbindungsprofils (2) erstreckende und
materialschlüssig geschlossene Zuführfuge (12) aufweist, und
**dass** die Zuführfuge (12) und die die Zuführfuge (12) umfassende Wandung (10) das gleiche Material umfassen.

2. Das Verbindungsprofil (2) gemäß dem Anspruch 1, wobei zwei sich in Längsrichtung des Verbindungsprofils (2) erstreckende Abschnitte (11, 13) der Wandung (10) materialschlüssig miteinander verbunden sind.

3. Das Verbindungsprofil (2) gemäß einem der vorigen Ansprüche, wobei das Verbindungsprofil (2) umfasst:
ein Isoliermaterial (14), welches in dem Innenraum (8) angeordnet ist.

4. Das Verbindungsprofil (2) gemäß einem der vorigen Ansprüche, wobei wenigstens eine Tragwandung (16; 18) die Befestigungsabschnitte (4, 6) miteinander verbindet, und wobei die die Zuführfuge (12) umfassende Wandung (10) keine Tragwandung (16; 18) ist.

5. Das Verbindungsprofil (2) gemäß einem der vorigen Ansprüche, wobei die die Zuführfuge (12) umfassende Wandung (10) zwischen zwei Fußkonturen (20, 22) des ersten Befestigungsabschnitts (4) angeordnet ist.

6. Das Verbindungsprofil (2) gemäß einem der vorigen Ansprüche, wobei das Isoliermaterial (14) ein aufgeschäumtes Material umfasst.

7. Das Verbindungsprofil (2) gemäß einem der vorigen Ansprüche, wobei das Isoliermaterial (14) eine reflektierende Dämmfolie umfasst, welche auf eine Oberfläche des Innenraums aufgeklebt ist.

8. Das Verbindungsprofil (2) gemäß einem der vorigen Ansprüche, wobei das Isoliermaterial (14) eine Beschichtung umfasst.

9. Ein Verbundprofil umfassend:
zwei Profile mit jeweiligen Aufnahmeabschnitten; und
wenigstens das Verbindungsprofil (2) gemäß einem der vorigen Ansprüche, welches zwischen den zwei Profilen angeordnet ist, und welches mit seinen Befestigungsabschnitten (4, 6) in den
Aufnahmeabschnitten aufgenommen ist.

10. Ein Verfahren zum Herstellen des Verbindungsprofils (2) nach einem der Ansprüche 1 bis 8 mit folgenden Schritten:
Extrudieren wenigstens eines Rohlings (202);
Transportieren des wenigstens einen Rohlings (202) über einen ersten Bereich (A) hinweg, in welchem mindestens eine Lanze (204) über eine geöffnete Zuführfuge (212) der Wandung (10) des Rohlings (202) in den geöffneten Innenraum (8) hineinragt;
Verschließen der geöffneten Zuführfuge (212) in einen zweiten Bereich (B) mittels einer Verbindungsvorrichtung (206) .

11. Das Verfahren gemäß dem Anspruch 10, wobei das Verfahren folgenden Schritt umfasst:
Einbringen des Isoliermaterials (14) in den Innenraum (8) in einem dritten Abschnitt (C), in welchem wenigstens eine Austrittsöffnung (208) der mindestens einen Lanze (204) innerhalb des geschlossenen Innenraums angeordnet ist.

12. Das Verfahren gemäß dem Anspruch 10 oder 11, wobei das Verfahren folgenden Schritt umfasst:
Kalibrieren des Innenbereichs vor dem Verschließen der geöffneten Zuführfuge (212).

13. Das Verfahren gemäß einem der Ansprüche 10 bis 12, wobei das Verfahren umfasst:
Ablängen des Verbindungsprofils (2) in einem vierten Abschnitt (D) mittels einer Ablängvorrichtung (210),
wobei der dritte und der vierte Abschnitt (C, D) so weit voneinander beabstandet sind, dass in dem vierten Abschnitt (D) eine Schneidfestigkeit des in den Innenraum (8) eingebrachten Isoliermaterials (14) erreicht ist.

## Claims

1. Connection profile (2) for a composite profile, the connection profile (2) comprising:
a first fastening portion (4) for fixing the connection profile (2) to a first profile of the composite profile;
a second fastening portion (6) for fixing the connection profile (2) to a second profile of the composite profile; and
at least one interior (8) located between the two fastening portions (4, 6), the interior (8) being delimited by a wall (10) of the connection profile (2),
**characterized in that**
the wall (10) has an integrally closed feed joint (12) which extends in the longitudinal direction of the connection profile (2) and
**in that** the feed joint (12) and the wall (10) comprising the feed joint (12) comprise the same material.

2. Connection profile (2) according to claim 1, wherein two portions (11, 13) of the wall (10), which extend in the longitudinal direction of the connection profile (2), are integrally joined to one another.

3. Connection profile (2) according to either of the preceding claims, wherein the connection profile (2) comprises:
an insulating material (14) which is arranged in the interior (8).

4. Connection profile (2) according to any of the preceding claims, wherein at least one support wall (16; 18) connects the fastening portions (4, 6) to one another, and wherein the wall (10) comprising the feed joint (12) is not a support wall (16; 18).

5. Connection profile (2) according to any of the preceding claims, wherein the wall (10) comprising the feed joint (12) is arranged between two foot contours (20, 22) of the first fastening portion (4).

6. Connection profile (2) according to any of the preceding claims, wherein the insulating material (14) comprises a foamed material.

7. Connection profile (2) according to any of the preceding claims, wherein the insulating material (14) comprises a reflective insulating film which is glued to a surface of the interior.

8. Connection profile (2) according to any of the preceding claims, wherein the insulating material (14) comprises a coating.

9. Composite profile comprising:
two profiles with respective receiving portions; and
at least the connection profile (2) according to any of the preceding claims, which is arranged between the two profiles and which is accommodated with its fastening portions (4, 6) in the receiving portions.

10. Method for producing the connection profile (2) according to any of claims 1 to 8, comprising the following steps:
extruding at least one blank (202);
transporting the at least one blank (202) over a first region (A) in which at least one extension pole (204) projects into the open interior (8) via an open feed joint (212) of the wall (10) of the blank (202);
closing the open feed joint (212) into a second region (B) by means of a connection device (206).

11. Method according to claim 10, wherein the method comprises the step of:
introducing the insulating material (14) into the interior (8) in a third portion (C), in which at least one outlet opening (208) of the at least one extension pole (204) within the closed interior is arranged.

12. Method according to claim 10 or 11, wherein the method comprises the following step:
calibrating the inner region before the open feed joint is closed (212).

13. Method according to any of claims 10 to 12, wherein the method comprises:
cutting the connection profile (2) to length in a fourth portion (D) by means of a cutting-to-length device (210), wherein the third and the fourth portion (C, D) are spaced so far apart from one another that a cutting resistance of the insulating material (14) introduced into the interior (8) is achieved in the fourth portion (D).

## Revendications

1. Profilé d'assemblage (2) pour un profilé d'assemblage, dans lequel le profilé d'assemblage (2) comprend :
une première partie de fixation (4) pour l'immobilisation du profilé d'assemblage (2) par rapport à un premier profilé du profilé d'assemblage;
une deuxième partie de fixation (6) pour l'immobilisation du profilé d'assemblage (2) par rapport à un deuxième profilé du profilé d'assemblage; et
au moins un espace intérieur (8) se trouvant entre les deux parties de fixation (4, 6), dans lequel l'espace intérieur (8) est délimité par une paroi (10) du profilé d'assemblage (2),
**caractérisé en ce**
**que** la paroi (10) présente un joint d'alimentation (12) s'étendant dans la direction longitudinale du profilé d'assemblage (2) et fermé par complémentarité de matières, et
**que** le joint d'alimentation (12) et la paroi (10) comprenant le joint d'alimentation (12) comprennent le même matériau.

2. Profilé d'assemblage (2) selon la revendication 1, dans lequel deux parties (11, 13) de la paroi (10) s'étendant dans la direction longitudinale du profilé d'assemblage (2) sont assemblées l'une à l'autre par complémentarité de matières.

3. Profilé d'assemblage (2) selon l'une quelconque des revendications précédentes, dans lequel le profilé d'assemblage (2) comprend :
un matériau isolant (14), lequel est disposé dans l'espace intérieur (8).

4. Profilé d'assemblage (2) selon l'une quelconque des revendications précédentes, dans lequel au moins une paroi porteuse (16 ; 18) assemble les parties de fixation (4, 6) l'une à l'autre, et dans lequel la paroi (10) comprenant le joint d'alimentation (12) n'est pas une paroi porteuse (16 ; 18).

5. Profilé d'assemblage (2) selon l'une quelconque des revendications précédentes, dans lequel la paroi (10) comprenant le joint d'alimentation (12) est disposée entre deux contours de pied (20, 22) de la première partie de fixation (4).

6. Profilé d'assemblage (2) selon l'une quelconque des revendications précédentes, dans lequel le matériau isolant (14) comprend un matériau moussé.

7. Profilé d'assemblage (2) selon l'une quelconque des revendications précédentes, dans lequel le matériau isolant (14) comprend un film d'isolation réfléchissant, lequel est collé sur une surface de l'espace intérieur.

8. Profilé d'assemblage (2) selon l'une quelconque des revendications précédentes, dans lequel le matériau isolant (14) comprend un revêtement.

9. Profilé d'assemblage comprenant :
deux profilés avec des parties de réception respectives ; et
au moins le profilé d'assemblage (2) selon l'une quelconque des revendications précédentes, lequel est disposé entre les deux profilés, et lequel est reçu avec ses parties de fixation (4, 6) dans les parties de réception.

10. Procédé pour la fabrication du profilé d'assemblage (2) selon l'une quelconque des revendications 1 à 8 avec les étapes suivantes :
l'extrusion d'au moins une ébauche (202) ;
le transport de la au moins une ébauche (202) au-delà d'une première zone (A), dans laquelle au moins une lance (204) fait saillie d'un joint d'alimentation (212) ouvert de la paroi (10) de l'ébauche (202) dans l'espace intérieur (8) ouvert ;
la fermeture du joint d'alimentation (212) ouvert dans une deuxième zone (B) au moyen d'un dispositif d'assemblage (206).

11. Procédé selon la revendication 10, dans lequel le procédé comprend l'étape suivante :
l'introduction du matériau isolant (14) dans l'espace intérieur (8) dans une troisième partie (C), dans laquelle au moins une ouverture de sortie (208) de la au moins une lance (204) est disposée à l'intérieur de l'espace intérieur fermé.

12. Procédé selon la revendication 10 ou 11, dans lequel le procédé comprend l'étape suivante :
l'étalonnage de la zone intérieure avant la fermeture du joint d'alimentation (212) ouvert.

13. Procédé selon l'une quelconque des revendications 10 à 12, dans lequel le procédé comprend :
la mise à longueur du profilé d'assemblage (2) dans une quatrième partie (D) au moyen d'un dispositif de mise à longueur (210), dans lequel la troisième et la quatrième partie (C, D) sont espacées l'une de l'autre jusqu'à ce que dans la quatrième partie (D) une résistance à la coupure du matériau isolant (14) introduit dans l'espace intérieur (8) soit atteinte.
